# EUROPÄISCHE PATENTANMELDUNG

(11) **EP 1 372 020 A1**
(43) Veröffentlichungstag der Anmeldung: **17.12.2003**
(21) Anmeldenummer: 02013144.7
(22) Anmeldetag: 14.06.2002
(51) Int. Cl.: G02C 7/08

(54) **Fernrohr-/Lupenbrille mit verbessertem Autofokussystem**

(71) Anmelder: Schael, Rudi, 82538 Geretsried (DE)
(72) Erfinder: Schael, Rudi, 82538 Geretsried (DE)

(57) **Zusammenfassung**

Die Erfindung bezieht sich auf eine Brille 1 mit Vergrößerungslinsensystemen 2a, 2b. Zur Entfernungsmessung wird dabei die von einem zu beobachtenden Objekt 9 ausgehende Strahlung verwendet.

## Beschreibung

Diese Erfindung bezieht sich auf eine sogenannte Fernrohrbrille oder Lupenbrille. Damit sind brillenartige Halterungen gemeint, die einerseits zwei vergrößernde Linsensysteme für die Augen eines Benutzers halten und andererseits über Ohrbügel oder in irgendeiner anderen Weise am Kopf des Benutzers befestigt werden können.

Solche Brillen werden beispielsweise von Sehbehinderten getragen oder von Chirurgen oder anderen konzentriert manuell arbeitenden Menschen als Arbeitshilfe verwendet. Sie können auch ein übliches Handfernglas ersetzen, wenn die Beobachtungsabstände größer sind.

Es ist grundsätzlich bekannt, die Linsensysteme solcher Brillen fokussierbar auszuführen und darüber hinaus unter Zuhilfenahme einer Entfernungsmesseinrichtung eine Autofokusfunktion vorzusehen, also eine motorische Fokussiereinrichtung mit Hilfe der Entfernungsmesseinrichtung so zu steuern, dass die Linsensysteme selbsttätig auf das zu beobachtende Objekt fokussiert werden.

Dazu werden im Stand der Technik beispielsweise lnfrarotenffernungsmesssysteme oder Ultraschallsysteme eingesetzt.

Ausgehend von diesem Stand der Technik liegt der vorliegenden Erfindung das technische Problem zugrunde, eine verbesserte Fernrohr-/Lupenbrille anzugeben.

Die erfindungsgemäße Brille zeichnet sich dadurch aus, dass die Entfernungsmesseinrichtung die Entfernung zu dem Objekt anhand von dem Objekt ausgehender Strahlung misst.

Im Gegensatz zum Stand der Technik ist die Autofokusfunktion der erfindungsgemäßen Brille also nicht von der Aussendung von Strahlung durch einen Sender an der Brille abhängig. Stattdessen verwendet die erfindungsgemäße Entfernungsmesseinrichtung die ohnehin von dem Objekt ausgehende Strahlung, also insbesondere das von dem Objekt ausgehende Licht, wobei auch eine Messung in anderen Frequenzbereichen als dem sichtbaren Licht denkbar ist.

Diese Vorgehensweise hat verschiedene wesentliche Vorteile: Zum Einen kann der entsprechende Sender an der Brille oder in der Nähe der Brille eingespart werden. Dies ist allerdings nicht so zu verstehen, dass die erfindungsgemäße Brille nicht auch mit einer für andere Zwecke dienenden Strahlungsquelle versehen werden könnte oder auch eine Lampe zur Beleuchtung bei schlechten Lichtverhältnissen aufweisen könnte (wobei dann das von der Lampe ausgehende Licht in dieser Situation mit zur Entfernungsmessung beitragen könnte). Wesentlich ist jedoch, dass die erfindungsgemäße Brille jedenfalls bei guten Beleuchtungsverhältnissen ohne einen Sender funktioniert. Damit ist die Brille auch nicht von der Energieversorgung einer solchen Strahlungsquelle abhängig. Wenn beispielsweise eine Leuchte zur besseren Beleuchtung des Gesichtsfeldes vorgesehen ist, so hängt die Funktion der Brille nicht von der Energieversorgung dieser Leuchte ab. Insbesondere kann die Brille aber auch, wenn man ganz auf eine Lichtquelle verzichtet, entsprechend leicht und kompakt ausgeführt werden. Dies betrifft auch eine für andere Komponenten der Brille, beispielsweise die motorische Fokussierungseinrichtung, vorhandene Leistungsversorgung, die entsprechend kleiner ausgebildet werden kann.

Außerdem eignet sich die erfindungsgemäße Entfernungsmessung sehr viel besser für eine Fokussierung bei größeren Beobachtungsabständen. Dabei ist zu berücksichtigen, dass die Intensität der von einer Strahlungsquelle an der Brille ausgehenden Strahlung bei dem Objekt bereits zu dem Quadrat des Kehrwerts des Abstandes proportional ist und somit die von dem Objekt wieder zu der Brille zurück- reflektierte und dort empfangene Strahlung von der vierten Potenz des Kehrwerts dieses Abstands abhängt. Die damit verbundenen Intensitätsprobleme beim Nachweis der empfangenen Strahlung bzw. die Anforderung an die Intensität der ausgesandten Strahlung führen bei größeren Beobachtungsabständen zu erheblichem technischen Aufwand. Im Gegensatz dazu erscheinen auch entferntere Gegenstände bei guter Beleuchtung hell, so dass eine Entfernungsmessung mit der von den Objekten an sich ausgehenden Strahlung bei Verwendung des Tageslichts bzw. der Allgemeinbeleuchtung eines Raumes keine abstandsabhängigen Intensitätsprobleme zeigt. Sollte beispielsweise eine von den Objekten selbst erzeugte Strahlungsart verwendet werden, etwa die Wärmestrahlung, so ist die Abstandsabhängigkeit der Intensität jedenfalls geringer. Bevorzugt ist allerdings die durch Tageslicht oder Allgemeinbeleuchtung gegebene Grundhelligkeit (nicht unbedingt nur im sichtbaren Bereich), die keine solche Abstandsabhängigkeit zeigt.

Damit kann die erfindungsgemäße Brille in technisch unproblematischer Weise auch bei größeren Beobachtungsabständen automatisch fokussieren und somit bei leichter und kompakter Bauform präzise optische Leistungen erbringen.

Dem Fachmann sind verschiedene Möglichkeiten bekannt, in der erfindungsgemäßen Weise Entfernungen zu messen. Ein Beispiel ist die Kontrastmaximierung bei der Erzeugung von Bildern abhängig von der korrekten Fokussierung, die direkt zu der richtigen Fokussierung und damit auch zu einer Entfernungsmessung führt. Ein defokussiertes optisches Bild ist grundsätzlich kontrastärmer als ein scharf fokussiertes, so dass sich aus einer Kontrastauswertung eine optische Fokussierung ableiten lässt.

Eine im Rahmen dieser Erfindung bevorzugte Alternative liegt in der Ausnutzung der entfernungsabhängigen Parallaxenverschiebung zwischen zwei Bildern, die von geringfügig seitlich gegeneinander versetzten Beobachtungspositionen ausgehend erzeugt werden. Wenn beispielsweise das linke und das rechte Linsensystem jeweils ein Bild erzeugen und dabei parallel zueinander ausgerichtet sind, so sind die Bilder entsprechend dem Abstand der Linsensysteme gegeneinander verschoben. Die Verschiebungsstrecke ist dabei - relativ zu dem Bildformat betrachtet - abhängig von dem Abstand zu dem abgebildeten Objekt. Somit kann aus der Verschiebungsstrecke die Entfernung bestimmt werden. Die Verschiebungsstrecke kann beispielsweise durch eine Korrelationsauswertung zwischen den Bildern erfasst werden. Es ist jedoch auch möglich, die Linsensysteme so zu verkippen, dass die beiden Bilder bestmöglich zur Überdeckung kommen. Dann kann aus dem Verkippungswinkel auf die Entfernung geschlossen werden bzw. die Fokussierung mechanisch an diese Verkippung gekoppelt werden. Die vorstehenden Ausführungen gelten dabei natürlich auch für eigens für die Entfernungsmesseinrichtung vorgesehene optische Systeme, die nicht notwendigerweise mit den Linsensystemen übereinstimmen müssen, durch die der Benutzer das Objekt beobachtet. Wesentlich ist nur, dass die verwendeten optischen Systeme das Objekt aus zwei gegeneinander versetzten Positionen beobachten.

Die erfindungsgemäßen Entfernungsmesssysteme lassen sich übrigens sehr kompakt und auch ganz ohne bewegte Teile realisieren, was im Regelfall von Vorteil ist.

Ferner lässt sich eine Entfernungsmesseinrichtung, die mit dem Parallaxeneffekt arbeitet, auch mit einem einzigen Lichtsensor realisieren, auf dem beide Bilder erzeugt werden. Dies gilt sowohl für den Fall der Bestimmung der Verschiebungsstrecke zwischen den beiden Bildern als auch für den Fall, dass die beiden Bilder zur Überdeckung gebracht werden sollen. In beiden Fällen ist es wiederum möglich, die Bilder nebeneinander auf verschiedenen Bereichen des Lichtsensors zu erzeugen und die Abweichungen von den einander entsprechenden Positionen in den jeweiligen Bereichen zu berücksichtigen oder die Bilder direkt übereinander zu projizieren.

Vorzugsweise ist dabei dem Lichtsensor eine optische Einrichtung vorgeschaltet, die den Abstand zwischen den beiden Beobachtungspositionen, der zu dem Parallaxeneffekt führen soll, vergrößert. Dabei kann es sich insbesondere um eine Prismenoptik oder Spiegeloptik handeln.

Die im Zusammenhang mit der Entfernungsmessung erwähnten Bilder können übrigens im wesentlichen eindimensional sein. Dies gilt sowohl für die Kontrastmaximierung bei der Fokussierung als auch für die Ausnutzung des Parallaxeneffekts. Dementsprechend kann der Lichtsensor im wesentlichen zeilenförmig aufgebaut sein, also eine Zeile aus einzelnen Fotodioden oder dgl. sein. Dies reicht für die Entfernungsmessung aus und vereinfacht die technische Konstruktion.

Es kann von Vorteil sein, für die Bildauswertung bei der Entfernungsmessung, also für die Kontrastmaximierung oder die Bestimmung einer Korrelation zur Bestimmung der Bildverschiebung oder auch für die Kontrastmaximierung oder Korrelationsberechnung zur Herstellung einer Überdeckung zwischen den beiden Bildern, einen Mikrocontroller oder eine andere Steuereinrichtung zu verwenden. Diese kann beispielsweise in einer von der Brille getrennten Einheit vorgesehen sein, die Vorteilhafterweise außerdem die Energieversorgung für sich selbst und für Einrichtungen in der Brille enthält. Diese getrennte Einheit kann der Benutzer beispielsweise an einem Gürtel oder einem Schulterriemen tragen.

Die Entfernungsmessung wird Vorteilhafterweise neben der Fokussierung auch für eine motorische Parallaxenkorrektur, also die bereits in einem anderen Zusammenhang erwähnte Verkippung der Linsensysteme, verwendet. Damit kann sichergestellt werden, dass die Linsensysteme durch eine konvergente Ausrichtung ihrer optischen Achsen auf das zu beobachtende Objekt dem Benutzer einen höheren Komfort bieten und eine bessere Beobachtung bei kurzen Abständen zu dem Objekt ermöglichen. Diese motorische Parallaxenkorrektur kann dabei mit der Entfernungsmessung gekoppelt sein, also beispielsweise zur Herstellung der gewünschten Überdeckung der durch die Entfernungsmesseinrichtung verwendeten Bilder dienen. Die Fokussierung wiederum kann direkt an die motorische Parallaxenkorrekturbewegung gekoppelt sein, also etwa durch ein Getriebe gekoppelt sein.

Damit können die motorische Parallaxenkorrektur und die motorische Fokussierung durch einen gemeinsamen Motor erfolgen, der entweder direkt die Fokussierung und mittelbar über ein Getriebe die Parallaxenkorrektur oder umgekehrt direkt die Parallaxenkorrektur oder beide Bewegungen mittelbar über Getriebe antreibt. Dabei kann ein gemeinsamer Motor für die Fokussierungsbewegung und die Parallaxenkorrektur beider optischer Systeme verwendet werden. Bevorzugt ist jedoch, die beiden Linsensysteme dahingehend zu entkoppeln, dass sie voneinander getrennte Motoren aufweisen, die jedoch vorzugsweise in Bezug auf das jeweils zugeordnete Linsensystem gemeinsam für die Fokussierung und die Parallaxenkorrektur zuständig sind. Die Linsensysteme sind also vorzugsweise motorisch und auch im übrigen mechanisch voneinander entkoppelt, wobei sie selbstverständlich durch die Brillenhalterung miteinander verbunden sind. Vorzugsweise weisen sie auch voneinander unabhängige Verstellvorrichtungen zur Einstellung des Augenabstands des Benutzers auf, um Asymmetrien des Gesicht des Benutzers durch exzentrische Einstellungen der beiden Linsensysteme in Bezug auf die Halterungsmitte berücksichtigen zu können. Diese Entkopplung zwischen den beiden Linsensystemen bietet außerdem die Möglichkeit eines relativ modularen Aufbaus, bei dem die jeweiligen Linsensysteme mit den zugehörigen Motoren und Bewegungseinrichtungen lediglich über die Brillenhalterung gekoppelte Module darstellen. Dies steht natürlich einer gemeinsamen Energieversorgung und/oder Steuerung durch die bereits erwähnte Steuereinrichtung nicht im Wege.

Eine unabhängige Fokussierung der beiden Linsensysteme hat ferner den Vorteil, dass bestimmte Sehschwächen besser kompensiert werden können. Es kann unter Umständen sinnvoll sein, die beiden Linsensysteme voneinander abweichend zu fokussieren, was bei einer entkoppelten Ausführung elektronisch berücksichtigt werden kann.

Die bei der Erfindung bevorzugte, jedoch nicht einzig mögliche Bauform der Linsensysteme sind Galilei-Systeme. Diese lassen sich zum Einen ohne eine Aufrichteoptik zur Behebung der Bildinversion (beispielsweise Aufrichteprisma) und, wie das Ausführungsbeispiel zeigt, auch im Übrigen kompakt ausführen. Sie haben gegenüber anderen Systemen zwar möglicherweise den Nachteil eines etwas eingeschränkten Gesichtsfeldes infolge der innerhalb liegenden Austrittspupille (Schlüssellocheffekt), jedoch erscheint dieser Nachteil im Vergleich zu anderen Vorteilen, insbesondere der kompakten und leichten Bauform, tolerabel.

Zu Gunsten der leichten und kompakten Bauweise sind ferner Festbrennweiten bevorzugt. Es wird also bei der Erfindung vorzugsweise auf Zoomobjektive, die in diesem Zusammenhang an sich bekannt sind, verzichtet.

Die Bauform des Galilei-Systems besteht vorzugsweise aus einem Objektiv mit positiver Brennweite und einem Okular mit negativer Brennweite, wobei die Hauptpunkte des Objektivs außerhalb der Baulänge, also objektseitig vor den Objektivlinsen liegen. Dabei ist das Objektiv zumindest zweilinsig, vorzugsweise jedoch dreilinsig. Die durch die dreilinsige Bauweise des Objektivs ermöglichten besseren Korrekturen haben sich als relevant herausgestellt. Bevorzugte Daten für das optische System zeigt das Ausführungsbeispiel und insbesondere die dort angegebene Tabelle. Im Rahmen dieser Erfindung sind die technischen Daten der Tabelle in einem Bereich ± 20% bevorzugt.

Die Erfindung kann jedoch auch mit Kepler-Systemen ausgeführt werden. Dabei sind wiederum zweilinsige Objektive positiver Brennweite kombiniert mit einem Okular bevorzugt, wobei jedoch das Okular eine positive Brennweite haben sollte. Zwischen dem Objektiv und dem Okular ist dann vorzugsweise ein Prismenumkehrsystem vorgesehen. Obwohl die Kepler-Bauform möglich ist, richtet sich die Erfindung jedoch vorzugsweise auf die Galilei-Bauform.

Zu Gunsten des Gewichts und des Tragekomforts können die optischen Systeme mit Kunststofflinsen ausgestattet sein, wobei vollständig aus Kunststofflinsen aufgebaute optische Systeme besonders bevorzugt sind. Darüber hinaus können die optischen Systeme auf der dem Objekt zugewandten Seite durch Schutzgläser abgedeckt sein. Dabei kann es sich um jeweils zugeordnete Gläser, also bei einer Brille um zwei Schutzgläser handeln. Es ist jedoch auch möglich, ein gemeinsames scheibenförmiges Schutzglas für beide optischen Systeme vorzusehen. Die Schutzgläser können natürlich auch aus Kunststoff bestehen; der Begriff "Glas" richtet sich hier also nicht auf das Material. Neben dem Schutz der optischen Systeme vor Verschmutzung und mechanischer Beschädigung haben die erwähnten Schutzgläser auch den Vorteil, das äußere Erscheinungsbild der Brille weniger auffällig zu gestalten. Es kann für einen Benutzer, insbesondere eine sehbehinderte Person, unangenehm sein, wenn Dritte im Detail erkennen können, dass die Person eine Brille mit aufwendigen optischen Systemen vor den Augen trägt. Wenn diese Systeme beispielsweise hinter einem teilverspiegelten oder aus anderen Gründen nicht ohne Weiteres durchsichtigen Schutzglas versteckt sind, kann dies die Akzeptanz der Brille bei den Benutzern wesentlich verbessern.

Schließlich eignet sich die Erfindung gut für eine Kombination mit einer Kamera. Vorzugsweise wird dabei ein Teil des Strahlengangs der erwähnten optischen Systeme ausgespiegelt und der Kamera zugeführt. Es können dabei auch zwei Kameras verwendet werden, um Stereobilder mit räumlichem Eindruck zu produzieren. Die Kameras müssen nicht notwendigerweise eigene optische Systeme oder zumindest nicht notwendigerweise vollständige eigene optische Systeme aufweisen, sondern können die für die Brille ohnehin vorgesehenen optischen Systeme mit nutzen. Im einfachsten Fall handelt es sich also um Fotosensorenfelder, etwa CCD-Arrays.

Im Folgenden wird die Erfindung anhand eines Ausführungsbeispiels näher erläutert, wobei die dabei dargestellten Einzelmerkmale auch in anderen Kombinationen erfindungswesentlich sein können.
- Fig. 1: zeigt eine schematisierte Draufsicht auf eine erfindungsgemäße Brille nach einem ersten Ausführungsbeispiel.
- Fig. 2: zeigt eine schematische Darstellung einer Entfernungsmesseinrichtung in der Brille aus Fig. 1.
- Fig. 3: zeigt eine Fig. 1 entsprechende schematisierte Draufsicht auf eine erfindungsgemäße Brille nach einem zweiten Ausführungsbeispiel.
- Fig. 4: zeigt eine schematische Darstellung der optischen Konstruktion eines Vergrößerungslinsensystems bei dem ersten und bei dem zweiten Ausführungsbeispiel.
- Fig. 5: zeigt eine Fig. 4 entsprechende schematische Darstellung einer weniger bevorzugten Variante für ein Vergrößerungslinsensystem für die beiden Ausführungsbeispiele.
- Fig. 6: zeigt eine seitliche Darstellung einer erfindungsgemäßen Brille mit dem Kopf eines Benutzers.
- Fig. 7: zeigt eine Frontansicht zu Fig. 6.
- Fig. 8: zeigt eine Draufsicht zu den Fig. 6 und 7.
- Fig. 9: zeigt eine perspektivische Ansicht eines Vergrößerungslinsensystems der Brille aus den Fig. 6, 7 und 8 einschließlich Fassung und Montage-einrichtungen für die Halterung.
- Fig. 10: zeigte eine weitere perspektivische Ansicht des Vergrößerungslinsensystems aus Fig. 9 in anderer Blickrichtung.

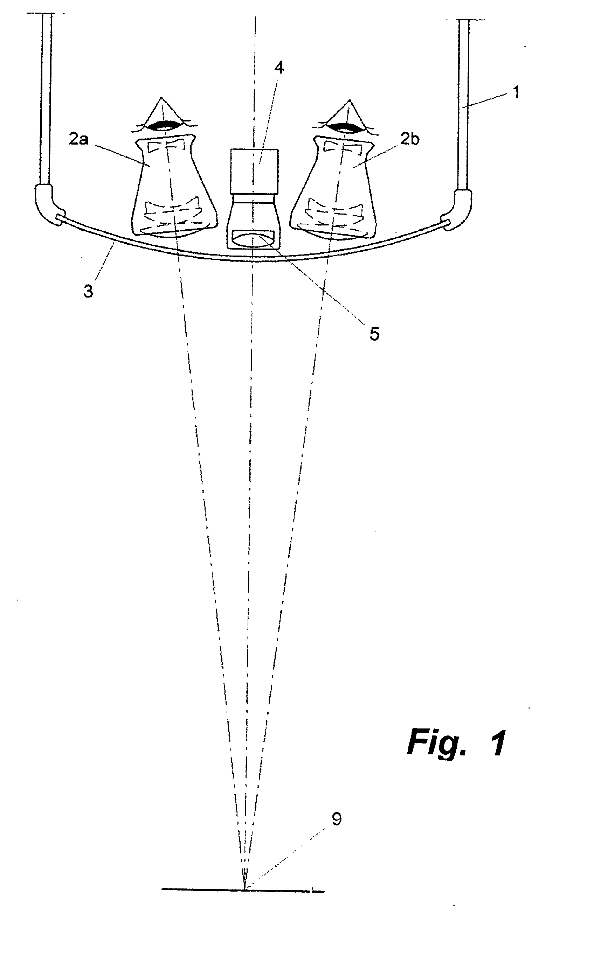

Fig. 1 zeigt das erste Ausführungsbeispiel in Draufsicht. Mit 1 ist eine Brillenhalterung bezeichnet, die zwei Ohrbügel und eine vordere Querstange 3 aufweist. An der Querstange 3 sind in nicht näher dargestellter Weise zwei Vergrößerungslinsensysteme 2a und 2b sowie eine Entfernungsmesseinrichtung 4, 5 befestigt.

Die Vergrößerungslinsensysteme 2a und 2b sind auf ein Objekt 9 ausgerichtet, und zwar derart, dass ihre optische Achse das Objekt 9 jeweils mit der optischen Achse des jeweiligen Auges des Benutzers verbindet. Dazu werden die Vergrößerungslinsensysteme 2a und 2b von einer Parallaxenkorrektureinrichtung in einer in Fig. 1 der Zeichenebene entsprechenden Ebene verkippt. Die Parallaxenkorrektureinrichtung sorgt also dafür, dass die beiden Vergrößerungslinsensysteme 2a und 2b bei einem konkreten Objekt 9 in einem bestimmten Beobachtungsabstand auf das Objekt 9 ausgerichtet sind.

Ferner sind die Vergrößerungslinsensysteme 2a und 2b auf das Objekt 9 fokussiert.

Zur Steuerung der Parallaxenkorrektureinrichtung und einer Fokussiereinrichtung dient dabei ein Signal der Entfernungsmesseinrichtung 4,5, die im wesentlichen aus einem Abbildungslinsensystem 5 und einem zeilenförmigen Lichtsensor 4 besteht. Dies ist in Fig. 1 schematisch dargestellt.

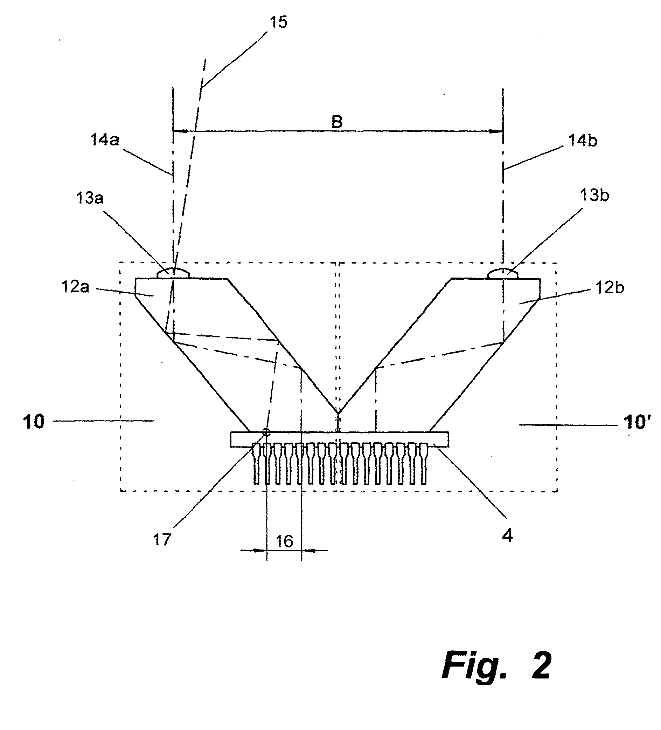

Fig. 2 zeigt eine Möglichkeit für eine Entfernungsmesseinrichtung mit dem zellenförmigen Lichtsensor 4, bei dem es sich hier um eine CCD-Zeile zur Erfassung von eindimensionalen Bildern des natürlichen (bzw. unabhängig von der Brille 1 vorhandenen) Umgebungslichts handelt. Die Zeilenrichtung liegt in Fig. 2 in der Zeichenebene horizontal. Vor den Lichtsensor 4 sind zwei spiegelsymmetrische Prismen 12a und 12b gebaut, die in der schematisch angedeuteten Weise für einfallende Lichtstrahlen 14a, 14b und 15 eine effektive Vergrößerung des Beobachtungsabstandes auf den Abstand zwischen den schematisch angedeuteten Eintrittslinsen 13a und 13b bewirken. Der Vergleich der Lichtstrahlen 14a und 15 verdeutlicht, dass die Einfallsrichtung des Lichtstrahls zu einer Verschiebung des entsprechenden Bildpunktes auf dem Lichtsensor 4 führt, die mit 16 bezeichnet ist und zu einem verschobenen Bildpunkt 17 führt.

Es wird deutlich, dass bei Parallaxeneinstellung auf unendlichen Beobachtungsabstand (entsprechend den Strahlen 14a und 14b) entsprechend der Mittelebene der Entfernungsmesseinrichtung symmetrische Bildpunkte erzeugt werden. Bei einem endlichen Beobachtungsabstand (entsprechend dem Strahl 15) wäre dies ebenfalls der Fall, wobei die Bildpunkte (vgl. 17) jeweils nach außen wandern. Aus dem Vergleich der Lage einander entsprechender Bildpunkte auf dem Lichtsensor 4 kann also auf die Verkippung der Lichtstrahlen und damit auf die Entfernung zu dem Objekt 9 geschlossen werden. Dazu ist eine dem Fachmann an sich vertraute Korrelationsberechnung erforderlich, die von einem Mikrocontroller durchgeführt wird. Dieser Mikrocontroller ist in den Figuren nicht dargestellt und befindet sich zusammen mit einer Energieversorgung für die Motoren der Brille in einer von dem Benutzer am Gürtel zu tragenden Einheit, die über ein Kabel mit der Brille verbunden ist.

In Fig. 2 erkennt man insbesondere, dass die Entfernungsmesseinrichtung tatsächlich aus zwei optischen Systemen 10 und 10' besteht, die sich im vorliegenden Fall einen baulich einheitlichen Lichtsensor 4 teilen.

Die Prismen 12a und 12b könnten hinter einer Linse 5 gemäß Fig. 1 angeordnet sein oder jeweils gemäß Fig. 2 eigene Linsen 13a, 13b aufweisen.

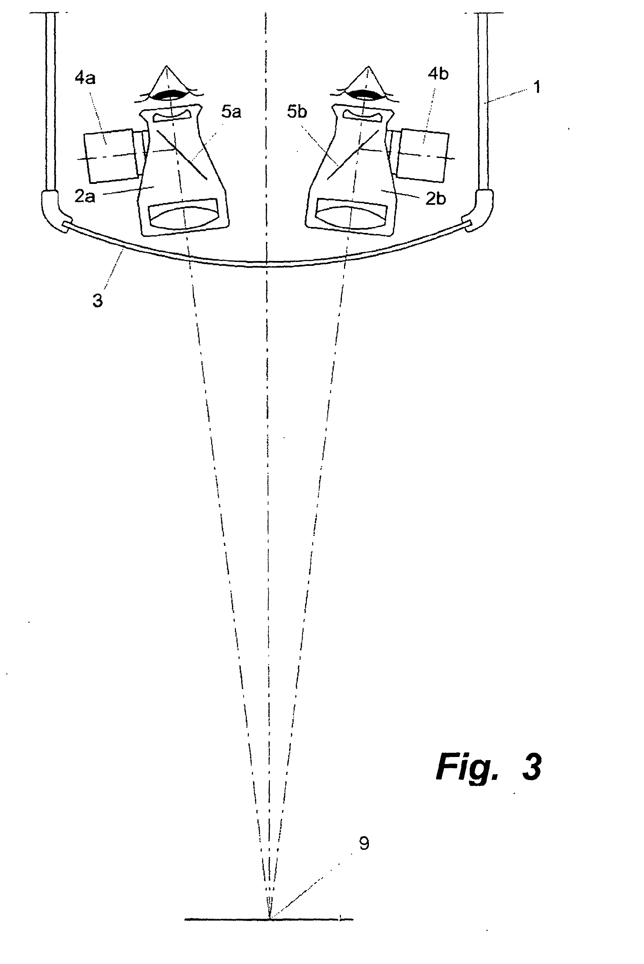

Fig. 3 zeigt ein zweites Ausführungsbeispiel als Variante zu den Fig. 1 und 2. Der Unterschied zu dem ersten Ausführungsbeispiel besteht darin, dass aus den Strahlengängen der beiden Vergrößerungslinsensysteme 2a und 2b über Spiegel 5a und 5b Lichtstrahlen zu Lichtsensoren 4a und 4b ausgespiegelt werden. Die Lichtsensoren erfüllen dieselbe Funktion wie die beiden Hälften des Lichtsensors 4 aus Fig. 2. Die Spiegel 5a und 5b können entweder teildurchlässig oder in einem Teil des Strahlengangs der Vergrößerungslinsensystems 2a und 2b angeordnet sein.

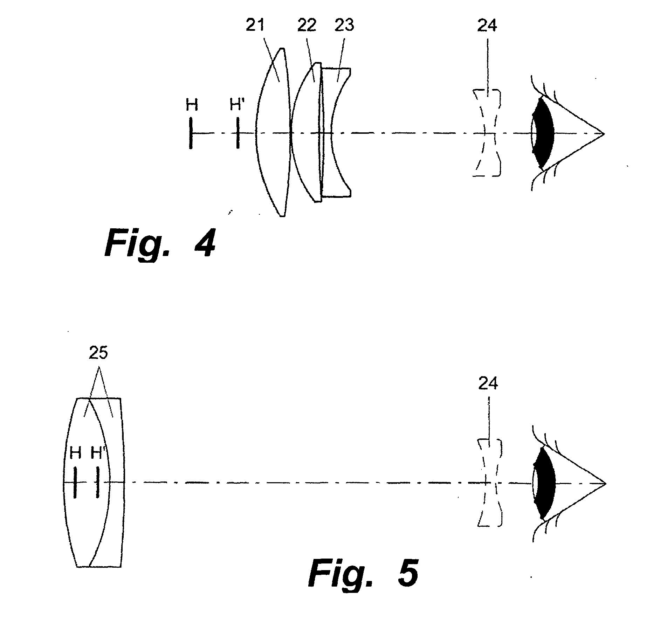

Fig. 4 zeigt schematisch einen Schnitt durch ein festbrennweitiges Vergrößerungslinsensystem zu den Ausführungsbeispielen in Fig. 1, 2 und 3. Es handelt sich um ein dreilinsiges Objektiv 21, 22 und 23 mit den in der folgenden Tabelle 1 angegebenen Konstruktionsdaten. Darin bedeutet "Radius" die jeweiligen Krümmungsradien der Linsen, "Dicke" die zugehörigen Linsendicken, "nd" die Brechkraft und "vd" die Dispersionszahl *sowie "⌀"* den Linsendurchmesser.

**Tabelle 1**

| Obiektiv für Fernrohrbrille nach Galilei bezogen auf Brennweite f'= 100 mm Öffnungszahl k = 2,07 | | | | | |
|---|---|---|---|---|---|
| | Radius | Dicke | nd / vd | | ø |
| Linse 1: | 52,453 | 10,31 | 1,492 | 55,4 | 48,3 |
| | - 159,4 | 0,25 | | | 47,3 |
| Linse 2: | 34,503 | 8,67 | 1,492 | 55,4 | 40,6 |
| | 338,75 | 1,25 | | | 38,1 |
| Linse 3: | -283,57 | 2,23 | 1,586 | 29,9 | 38,0 |
| | 32,833 | | | | |

Die Daten sind auf eine Brennweite von 100 mm bezogen, wobei das System linear mit der Brennweite skaliert. Wenn also beispielsweise eine Brennweite von tatsächlich 45 mm benötigt wird, so sind alle Längenmaße (Radius, Dicke, ⌀) aus Tabelle 1 mit dem entsprechenden Korrekturfaktor 0,45 zu multiplizieren. Die Okularlinse 24 ist dabei nicht berücksichtigt und daher nur gestrichelt dargestellt.

Fig. 4 zeigt, dass die Hauptpunktlagen H und H' - die maßstäblich dargestellt sind-objektseitig vor den Linsen 21, 22 und 23 liegen. Das dreilinsige Objektiv zeichnet sich insbesondere durch die Negativlinse 23 aus, die im Zusammenhang mit der Außenlage der Hauptpunkte H und H' zu sehen ist und im Übrigen eine verbesserte Farbkorrektur bietet, indem dort ein Material mit höherer Dispersion gewählt wird.

Das Vergrößerungslinsensystem aus Fig. 4 benötigt als Galilei-System kein Aufrichteprisma.

Fig. 5 zeigt zum Vergleich ein anderes Galilei-System, bei dem die Hauptpunktlagen H und H' innerhalb des hier zweilinsigen Objektivs 25 liegen. Es wird deutlich, dass die Gesamtbaulänge erheblich größer ist und damit die Ausführungsvariante aus Fig. 4 bei einer Anwendung in einer Brille große Vorteile bietet. Daneben ist das in Fig. 4 dargestellte dreilinsige Objektiv sehr leistungsstark und, insbesondere bei Ausführung in Kunststoff, nicht zu schwer.

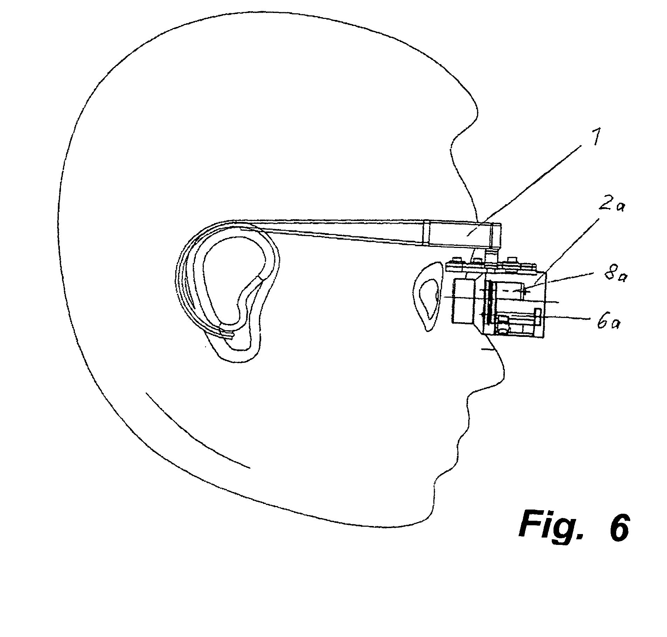

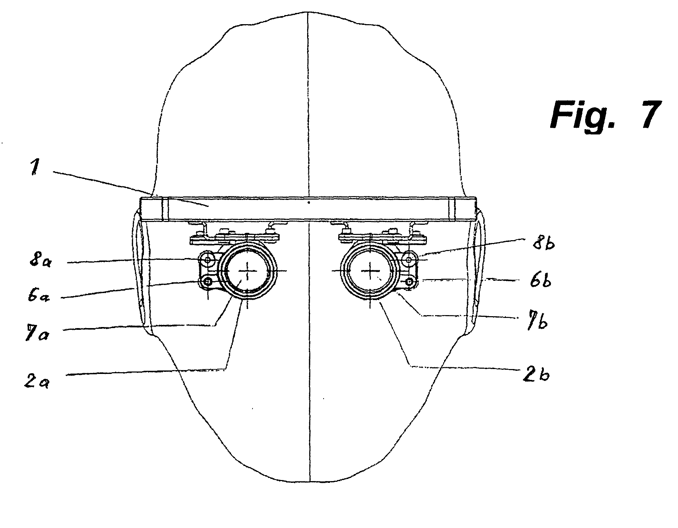

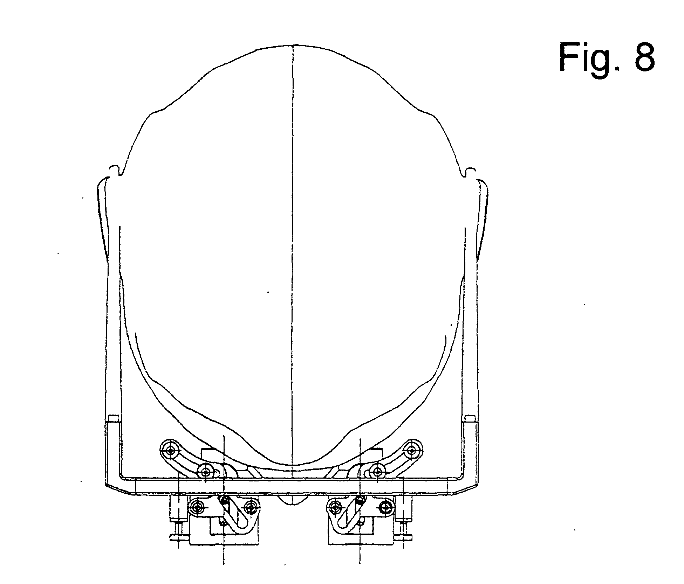

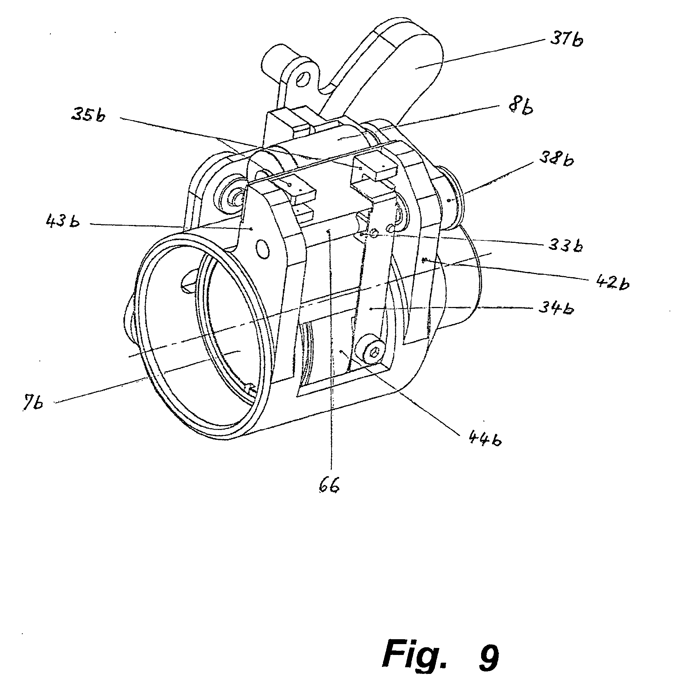

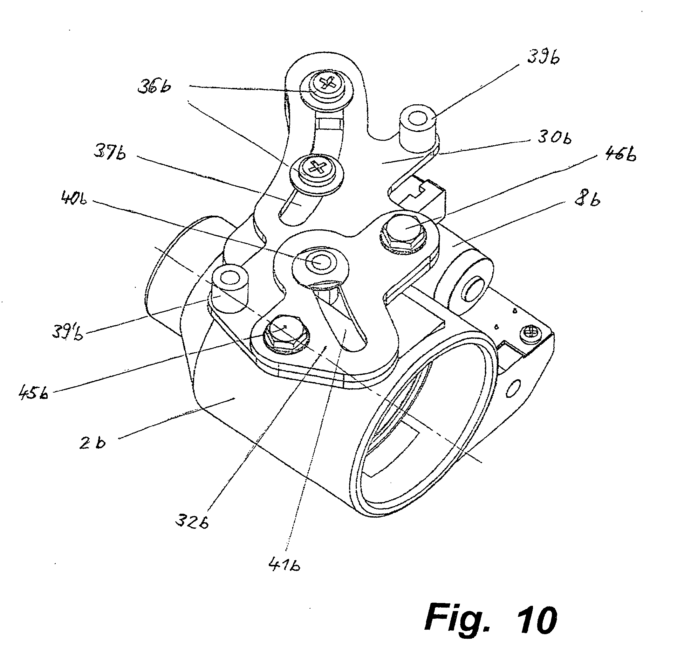

Fig. 6 zeigt eine der Brillen aus den Fig. 1 und 3 in Seitenansicht am Kopf eines Benutzers. Fig. 7 zeigt dieselbe Brille in Frontansicht und Fig. 8 zeigt die Brille in Draufsicht. Die Konstruktion der einzelnen Vergrößerungslinsensysteme mit den Fassungen und den Montageeinrichtungen zur Befestigung an der Halterung, d.h. konkret an dem Querträger 3, sind in den Fig. 9 und 10 perspektivisch dargestellt. In den Fig. 6, 7 und 8 sind die Bezugszeichen weggelassen und nur in den Fig. 9 und 10 angegeben.

Die Figuren 9 und 10 zeigen zwei verschiedene Perspektiven, wobei die einzelnen im Folgenden dargestellten Details teilweise nur in einer der beiden Figuren zu sehen sind. Hier handelt es sich um das linke Vergrößerungslinsensystem 2b und die zugehörigen Montageeinrichtungen, die auch zur mechanischen Bewegung und Kopplung der Parallaxeneinstellung und Fokussierbewegung dienen.

Eine Befestigungsplatte 30b ist mittels Stehbolzen 39b und 39'b an dem Querträger 1 des Brillengestells befestigt. Das Vergrößerungslinsensystem 2b ist über Führungsstifte 36b in einer kreisförmigen Führungsbahn 37b um den Augendrehpunkt des Benutzers in den horizontalen Ebenen drehbar gelagert. Das Vergrößerungslinsensystem 2b weist ferner zwei Lagerplatten 42b und 43b auf. An der Lagerplatte 42b ist ein Antriebsmotor 8b befestigt, der über Zahnriemen und Riemenscheibe 38b eine Spindel 6b antreibt, die in den Lagerplatten 42b und 43b gelagert ist. An die Spindel 6b ist eine halbseitige Mutter 33b über eine Blattfeder 34b spielfrei und unter Federdruck angelegt. An der anderen Seite ist die Blattfeder 34b an einer Fassung 44b des axial verschiebbaren Objektivs 7b des Vergrößerungslinsensystems 2b befestigt. Die Fassung 44b hat einen Führungsstift 40b, der in einer Führungsnut 41b einer Führungsplatte 32b während der Fokussierung geführt wird und dabei das Gesamtvergrößerungslinsensystem 2b mit der daran befindlichen Platte 31b einschließlich der daran befestigten Führungsstifte 36b kreisförmig in der horizontalen Ebene so um den Augendrehpunkt dreht, dass die optische Achse des Vergrößerungslinsensystems stets auf das fokussierte Objekt 9 gerichtet bleibt.

Die Führungsplatte 32b ist auf der Befestigungsplatte 30b über Schrauben 45b, 46b justierbar befestigt. Diese Justierung erfolgt durch ein Spiel der Bohrungen bei gelösten Schrauben und dient als Voreinstellung für den individuell unterschiedlichen Augenabstand von Benutzern. Dabei handelt es sich um eine Kippung der Führungsplatte 32b und damit der Führungsnut 41 b.

Es wird deutlich, dass der Antrieb durch den für das Vergrößerungslinsensystem 2b individuellen Motor 8b durch eine mechanische Getriebekupplung sowohl für eine Fokussierung als auch für eine Parallaxenkorrektur sorgt.

Zur Entfernungsmessung können die beiden Varianten aus den Fig. 1 und 3 verwendet werden. Die Entfernungsmesseinrichtung könnte allerdings auch mit der Parallaxenkorrektureinrichtung kombiniert sein, indem die Parallaxenkippung der Vergrößerungslinsensysteme 2a und 2b so durchgeführt wird, dass der oder die Lichtsensoren eine durch eine Korrelationsberechnung zu ermittelnde Übereinstimmung der Bilder zeigen.

Die in den Fig. 6, 7 und 8 dargestellte Brille ist in der Praxis mit einer Frontschutzscheibe abgedeckt, so dass die in den Figuren erkennbare technische Konstruktion für Fremde nicht ohne Weiteres zu erkennen ist.

Im Übrigen kann das in den Fig. 9 und 10 dargestellte Vergrößerungslinsensystem mit einer nicht dargestellten Kamera kombiniert sein.

## Patentansprüche

1. Brille (1) mit:
einer Halterung (3), die am Kopf eines Benutzers befestigt werden kann,
zwei, jeweils einem Auge des Benutzers zugeordneten fokussierbaren Vergrößerungslinsensystemen (2a, 2b), die an der Halterung (3) angebracht sind,
einer Entfernungsmesseinrichtung (4, 5) zum Messen der Entfernung zu einem von dem Benutzer durch die Brille (1) zu beobachtenden Objekt (9) und
einer von der Entfernungsmesseinrichtung gesteuerten Fokussiereinrichtung (6b, 8b, 33b, 34b, 38b, 44b) zum motorischen Fokussieren der Linsensysteme (2a, 2b) auf das Objekt (9),
**dadurch gekennzeichnet, dass** die Entfernungsmesseinrichtung (4, 5) die Entfernung zu dem Objekt (9) anhand von dem Objekt (9) ausgehender Strahlung misst.

2. Brille (1) nach Anspruch 1, bei der die Entfernungsmesseinrichtung (4, 5) die Entfernung anhand einer Parallaxen-Bildverschiebung misst.

3. Brille (1) nach Anspruch 2, bei der die Entfernungsmesseinrichtung (4, 5) genau einen Lichtsensor (4) aufweist, auf dem zwei parallaxenverschobene Bilder erzeugt werden können.

4. Brille (1) nach Anspruch 3, bei der die Entfernungsmesseinrichtung (4, 5) eine dem Lichtsensor (4) vorgeschaltete Prismen- oder Spiegeloptik (12a, 12b) zur Vergrößerung des Parallaxenabstandes aufweist.

5. Brille (1) nach Anspruch 2, 3 oder 4, bei der die Entfernungsmesseinrichtung (4, 5) mit der Parallaxenverschiebung im wesentlichen eindimensionaler Bilder auf zumindest einem zeilenförmigen Lichtsensor (4) arbeitet.

6. Brille (1) nach einem der vorstehenden Ansprüche mit einer mit der Brille (1) nur über Kabel verbundenen Steuereinrichtung, die von dem Benutzer getrennt von der Brille (1) getragen werden kann.

7. Brille (1) nach einem der vorstehenden Ansprüche mit einer motorischen Parallaxenkorrektureinrichtung (6b, 8b, 32b - 46b) zum motorischen Kippen der Linsensysteme (2a, 2b) in solcher Weise, dass sich die optischen Achsen der Linsensysteme (2a, 2b) bei dem zu beobachtenden Objekt (9) treffen, wobei die Parallaxenkorrektureinrichtung (6b, 8b, 32b - 46b) ansprechend auf Signale der Entfernungsmesseinrichtung (4, 5) gesteuert wird.

8. Brille (1) nach Anspruch 7, bei der die Fokussiereinrichtung (6b, 8b, 33b, 34b, 38b, 44b) und die Parallaxenkorrektureinrichtung (6b, 8b, 32b - 46b) einen gemeinsamen Motor (8b) aufweisen.

9. Brille (1) nach einem der vorstehenden Ansprüche, bei der die Linsensysteme (2a, 2b) jeweils einen eigenen Motor (8b) für die Fokussiereinrichtung (6b, 8b, 33b, 34b, 38b, 44b) aufweisen.

10. Brille (1) nach einem der vorstehenden Ansprüche, bei der die Linsensysteme (2a, 2b) Galilei-Systeme sind.

11. Brille (1) nach einem der vorstehenden Ansprüche, bei der die Linsensysteme (2a, 2b) eine Festbrennweite aufweisen.

12. Brille (1) nach einem der vorstehenden Ansprüche, bei der die Linsensysteme (2a, 2b) jeweils ein Objektiv (21, 22, 23) positiver Brennweite mit objektseitig vor dem Objektiv (21, 22, 23) befindlichen Hauptpunkten (H, H')sowie ein Okular (24) mit negativer Brennweite aufweisen.

13. Brille (1) nach einem der vorstehenden Ansprüche, bei der die Objektive (21, 22, 23, 25) der Linsensysteme (2a, 2b) zumindest zwei-, vorzugsweise zumindest dreilinsig sind.

14. Brille (1) nach einem der vorstehenden Ansprüche, bei der die Linsensysteme (2a, 2b) ausschließlich mit Kunststofflinsen aufgebaut sind.

15. Brille (1) nach einem der vorstehenden Ansprüche, bei der die Linsensysteme (2a, 2b) zumindest ein objektseitiges Schutzglas aufweisen.

16. Brille (1) nach einem der vorstehenden Ansprüche mit einer Kamera zur Beobachtung des Objekts (9) durch Ausspiegelung aus dem Strahlengang eines der Linsensysteme (2a, 2b).
